# EUROPEAN PATENT APPLICATION

(11) **EP 4 755 711 A1**
(43) Date of publication of application: **10.06.2026**
(21) Application number: 24383328.2
(22) Date of filing: 05.12.2024
(51) Int. Cl.: B60N 2/70, B60N 2/72, B60N 2/803

(54) **SEAT BACKREST FOAM, BACKREST AND MOUNTING METHOD THEREOF**

(71) Applicant: Seat, S.A., 08760 Martorell - Barcelona (ES); Skoda Auto a.s., 293 01 Mladá Boleslav (CZ); VOLKSWAGEN AG, 38440 Wolfsburg (DE)
(72) Inventor: Moreno Barbeta, Alfons, 08760 MARTORELL (ES); Valero Diaz, David, 08760 MARTORELL (ES); Hupel, Martin, 08760 MARTORELL (ES)
(74) Representative: Pons IP

(57) **Abstract**

A seat backrest foam comprising a first headrest area (11) and a second backrest area (12), the first headrest area (11) and the second backrest area (12) forming a single foam body (1), the foam defining a window (13) passing through from a first surface of the foam, supporting a seat occupant, to a second surface of the foam, located opposite the first surface, and further comprising at least one block (4) disposed adjacent to a wall of the foam defining the window and mechanically linked to said wall by a joining line (8), wherein the block forms a single body with the foam (1) and is configured to rotate 180° about the joining line. The invention also relates to a backrest containing the foam and to the method of mounting the backrest.

## Description

### OBJECT OF THE INVENTION

The present invention relates to a seat backrest foam, with the objective of avoiding, in the backrest assembly operation, which consists of sheathing a structure with the foam and subsequently sheathing the structure-foam assembly with an outer cover, problems affecting the geometry or external appearance of the seat resulting from said assembly operation.

The invention also relates to the backrest containing this foam and to the method of mounting the backrest.

### BACKGROUND OF THE INVENTION

In the manufacture of a car seat, the incorporation or sheathing of the outer cover is a delicate process that requires a great deal of precision. This is because the single-body cover is pressed into the foam padding covering the seat frame at one end of the backrest and slides along the backrest. Due to the length of the backrest, any creases, wrinkles or deformations that occur are difficult to smooth out again. Such wrinkles can lead to comfort problems for the user, or accelerate the deterioration of the cover, in addition to the obvious visual defects in the surface finish of the seat.

In the state of the art, due to the dimensional dispersions of the housing, the padding block and the sheath, a bad support of the dropped edge in the rear area of the sheath may occur, which risks causing the occurrence of a play between the dropped edge and said rear area of the sheath.

Such is the case of the headrest of document FR3120575A1, which describes a headrest for a vehicle seat comprising a housing for absorbing energy in the event of an impact, a padded block based on elastically compressible material and a cover material cover mounted on a block. The cover is provided with a peripheral fastening profile made of plastic material, having the shape of a strip whose free edge is shaped like a harpoon. The profile is inserted into a groove provided on the periphery of the rear face of the housing and the bottom of this groove is provided with a stop to anchor and allow assembly. At the same time, another casing of molded plastic material is attached to said rear face to mask it, said casing having a dropped edge resting on the rear area of said cover extending along said profile.

### DESCRIPTION OF THE INVENTION

The invention relates, according to a first aspect, to a foam of a backrest of a seat with a configuration whose purpose is to avoid malformations when the outer sheath covering the foam is inserted.

The foam comprises a first headrest area, configured to cover the headrest structure of the seat, and a second backrest area, configured to cover the backrest structure of the seat.

The first headrest area and the second backrest area are joined together to form a single foam body. As an example, the backrest may have a bucket-type configuration, where the headrest is not movable with respect to the main body of the backrest.

In addition, a window is defined in the foam between the first headrest area and the second backrest area. This window is pass-through from a first surface of the foam, configured to serve as a support for a seat occupant, to a second surface of the foam, located opposite the first surface. This second foam surface is arranged facing the rear seats of the vehicle.

In addition to the first headrest area and the second backrest area, the foam also comprises at least one block disposed adjacent to one of the foam walls defining the window, each block being mechanically linked to the corresponding wall by means of a joining line. The block is an integral part of the foam, forming a single body. It is understood that the block may be mechanically linked to a wall of the first headrest area defining the window, or it may be mechanically linked to a wall of the second headrest area defining the window, or there may be a configuration with two blocks, each block being linked respectively to wall of the first headrest area and to a wall of the second backrest area. In either configuration, the block, joining line and foam backrest form a single foam body.

On the other hand, the joining line is configured so that the block can rotate 180 degrees around it.

Advantageously, it is possible to obtain a foam body that integrates in the same body a block, simplifying the process of obtaining said block with respect to a configuration where the block is obtained individually by means of a proprietary production process. In addition, the joining line linking the block to the foam body allows the block to be rotated to arrange it as appropriate, e.g., rotated to arrange it in a position of use.

Preferably, the rotation of the block is between a manufacturing position, where the block is arranged at least partially blocking the window, and a position in use, where the block is arranged between the first surface and the second surface of the foam. Thus, the existence of the window is used to obtain the block without generating complexity in the foam manufacturing mold. By means of the joining line, the block is rotated to arrange it in the position of use.

In one embodiment, the foam comprises a cavity configured to house the block in the position of use, said cavity being configured to allow passage of the seat headrest structure and backrest structure during the foam covering operation. This cavity is necessary for the assembly of the foam on the backrest structure. Thus, the foam is mounted from one end of the structure, preferably the end where the headrest is located, and slides downward to cover the entire backrest structure. The arrangement of these cavities is necessary to carry out the described assembly and to ensure that the final fit between the foam and the structure is correct.

Both the first foam headrest area and the second foam backrest area may comprise a pocket-shaped geometry configured to accommodate, respectively, the headrest structure and the backrestrest structure, the window being in communication with the interior of the pocket through the cavity.

Thus, in its position of use, the block can be flush with the surface of the first headrest area defining the window or also with the surface of the second backrest area defining the window. Thus, in such a position of use, the block can be disposed in the cavity, and contacting the inner walls of the foam with bag-shaped geometry. It should be taken into account that the cover is sized to cover the foam without slack, slightly tightening the foam so that the cover does not move relative to the foam. The existence of cavities in the foam and the low consistency or rigidity of the foam may cause the foam to deform under the pressure exerted by the casing. The block would prevent such deformation while maintaining an optimal aesthetic and functional appearance of the backrest. In addition, once the foam is covered by the outer sheath, the window must be well defined without malformations that could be generated by the presence of cavities in these surfaces.

Preferably, the transverse dimension of the block, according to a direction from the first foam surface to the second foam surface, is greater than the transverse dimension of the cavity. In this way, the block is compressed in the foam once it is turned over to the position of use.

The foam may also comprise a joining body, preferably of flexible material and, according to one embodiment, of textile material, arranged adjacent to the joining line and configured to allow the block to be rotated relative to the foam so that the joining body is folded back on itself. Thus, the joining body is arranged covering the joining line and, at least partially, the block and the first headrest area or the second backrest area, depending on the area to be covered by the foam. In this way, the joining body prevents the block from being released from the foam, e.g. due to breakage of the joining line.

Further, when the block is arranged in the manufacturing position, the junction body preferably extends in a plane substantially parallel to the first surface or the second surface of the foam, the junction body being configured to isolate the joining line from both the backrest structure and the headrest structure during the foam covering operation. This provides resistance to abrasion or friction in the area of the joining line, which is particularly weak due to its geometry and function.

A second aspect of the present invention relates to a backrest comprising the headrest structure, the backrest structure and the foam described above.

This backrest may further comprise a single cover configured to cover the first headrest area and the second foam backrest area. As mentioned above, this cover is configured to cover the backrest foam without slack and to slightly compress it. Thus, the block has the function of counteracting the compression force generated in the foam, maintaining an optimal visual and functional appearance.

A third aspect of the invention relates to a procedure for mounting the aforementioned backrest. This procedure comprises the following steps:
- obtaining a backrest structure and a headrest structure;
- obtaining a foam configured as a single body, comprising at least one block joined to the foam by an area to be selected between the first headrest area and the second backrest area by means of a joining line;
- covering the backrest structure and the headrest structure by means of foam;
- rotating the block 180° around the joining line; and
- covering the first headrest area and the second foam backrest area with a single cover.

According to one embodiment, the step of obtaining a single foam body comprises a previous step of arranging a joining body in the foam forming mold, in an area so that the joining body is arranged adjacent to the joining line.

According to one embodiment, the backrest structure is made of metallic material, for example, by extrusion or steel forming. The headrest structure can also be made of metal or rigid plastic.

According to one embodiment, the foam is manufactured from PUR, an elastomer resulting from the mixture of two components: polyol and isocyanate, both in a liquid state, which are mixed when sprayed onto a mold cavity to react with each other and expand the resulting product in the form of foam. For this purpose, the molds have a bottom that houses an A side (visible side of the foam, on which the outer cover sits) and a cover that forms the B side (hidden side, which rests against the seat structure). This cover is open when the mixture is sprayed and begins to close when the injector nozzle is removed from the polyol and isocyanate mixture.

The mixture expands when the mold is closed and fills all the nooks and crannies of the mold, soaking all the elements that must be inserted into the foam, such as agglomerates, layers, reinforcing mesh and upholstery fasteners. The joining body is also placed inside the mold to be embedded in the foam.

This results in a foam production process that integrates the block and, depending on the method of ambodyment, the joining body, in the same manufacturing process. This simplifies the production process, assembly and assembly of the backrest.

### DESCRIPTION OF THE DRAWINGS

To complement the description being made and in order to aid in a better understanding of the features of the invention, in accordance with a preferred example of practical embodyment thereof, there is attached as an integral part of said description, a set of drawings wherein, with illustrative and non-limiting character, the following has been represented:
Figure 1.- Shows a perspective view of the structure of a vehicle seat, consisting of the seat, the backrest and the headrest, according to the prior art.
Figure 2.- Shows a view of the headrest of a vehicle seat with the foam covering the structure, comprising the first headrest area of a block linked thereto, according to the present invention.
Figure 3.- Shows a cross-sectional view of the headrest of figure 2, showing the headrest structure and the first headrest area of the foam, with the block attached to the first headrest area by a joining body in a manufacturing position, according to the present invention.
Figure 4.- Shows a cross-sectional view of a headrest with a block in position of use, according to the present invention.

The following is a list of the different elements represented in the figures with their associated numerical references:
1. Foam
4. Block.
6. Joining body.
8. Joining line.
9. Cavity.
11. First headrest area.
12. Second backrest area.
13. Window.
21. Headrest structure.
22. Backrest structure.

### PREFERRED EMBODIMENT OF THE INVENTION

A preferred embodiment of the seat reinforcement according to the present invention is described below with the aid of the figures.

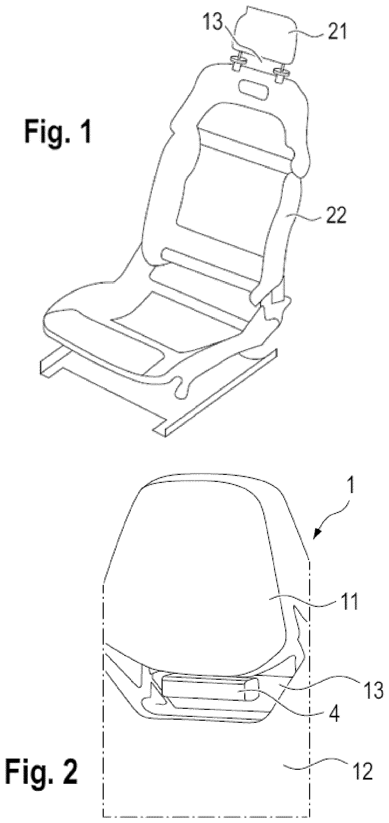

Figure 1 shows a vehicle seat structure in which the headrest structure (21) and the backrest structure (22) can be seen. The headrest structure (21) is mechanically linked to the backrest structure (22) by means of two rods. Said two rods, the lower surface of the headrest structure (21) and the upper surface of the backrest structure (22) delimit a through window (13), as described below.

Figure 2 shows a detail of the foam (1) of a vehicle seat, consisting of a first headrest area (11), a second backrest area (12) and a block (4). In the embodiment shown in said figure 2, the block (4) is mechanically linked to the first headrest area (11). According to alternative embodiments, the block (4) may be mechanically linked to the second headrest area (22), or there are two blocks (4) each mechanically linked to the first headrest area (11) and the second backrest area (12) respectively.

The block (4) is located in the through window (13) delimited between the lower surface of the headrest structure (21) and the upper surface of the backrest structure (22), being now arranged between the first headrest area (11) and the second backrest area (12).

The foam (1) covers the structure of figure 1, such that the first headrest area (11) is intended to cover the headrest structure (21) and the second backrest area (12) is intended to cover the backrest structure (22).

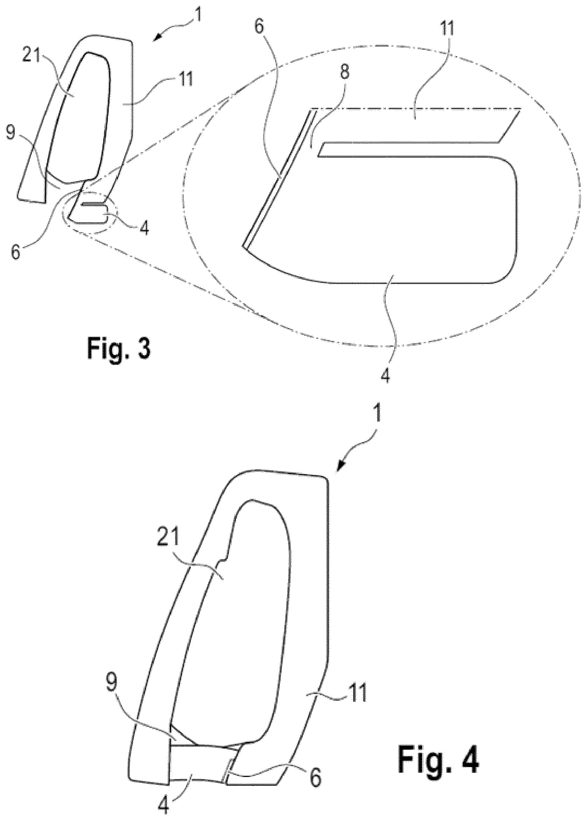

The process of inserting the foam (1) into the structure is as if it were a sheath. This means that the foam (1) is configured in the form of a pocket, as a hollowed-out piece with an opening in the area of the second backrest area (12) that is inserted through the headrest structure (21) until the bottom of the foam (1), where the first headrest area (11) is located, butts against it. In addition, the first headrest area (11) has a longer length than the headrest structure (21), so that, once the foam (1) is inserted, a cavity (9) remains in the lower area, just above the window (13) existing between the backrest structure (22) and the headrest structure (21). This cavity (9) can be seen in Figures 3 and 4.

On its side, and not shown in the figures, the second backrest area (12) has a longer length than the backrest structure (22), so that, once the foam (1) is inserted, a cavity (9) remains in the upper area, just below the window (13) existing between the backrest structure (22) and the headrest structure (21).

Said cavities (9) are necessary to be able to perform the assembly of the foam (1) on the backrest structure (22) described above.

The seat that has been selected to describe the preferred embodiment is of the type known in the industry as bucket, which has the particularity that it incorporates the window (13) through mentioned in the lower area of the headrest, between the first headrest area (11) and the second backrest area (12). In this way, the outer cover intended to cover the foam (1) completely is a single and continuous piece, integrating the headrest or headrest and the backrestrest, being arranged between the first headrest area (11) and the second backrest area (12) of said window (13). An example of such a window (13) can be seen in Figure 2. As can be seen, and in order to make the foam (1) a single body between the first headrest area (11) and the second backrest area (12), the window (13) is delimited perimetrically by walls of said foam (1). In particular, there is foam (1) on the sides of said window (13) communicating the first headrest area (11) with the second backrest area (12).

Figure 3 represents a cross section through the central area of the first headrest area (11) together with the block (4) depicted in Figure 2.

In this figure an enlargement can also be seen in order to distinguish more clearly the joining of the block (4) to the first headrest area (11) by means of a joining line (8) so that, during the manufacture of the foam (1), the material that forms it can access the block (4) through the joining line (8) and thus manufacture the foam (1) composed of a single element, formed, in addition to the second backrest area (12), by both the first headrest area (11) and the block (4), both elements being joined by a joining line (8) to form the foam (1) as a single piece.

In this figure, the block (4) is arranged in its manufacturing position, said block (4) occupying the space of the through window (13). The joining line (8), in addition to allowing the foam (1) to be manufactured as a single component, allows said block (4) to be rotated around an axis corresponding to said joining line (8). Thus, the block (4) can be rotated about 180° about said axis, so that said block (4) can be arranged in the position of use (depicted in Figure 4).

As shown in Figure 3, the first headrest area (11) and the block (4) are joined by a joining body (6) along a span of sufficient length for the two parts (4, 11) to be held together as will be described below. The joining body (6) is fixed to the first headrest area (11) and to the block (4) in the same production process of the foam (1), i.e. the expansion of the polyol-isocyanate mixture inside the mold produces the mechanical joining of the foam (1) with the joining body (6). Alternatively, it could be attached with adhesive to the first headrest area (11) and the block (4). Said joining body (6) has the function of protecting the area of the joining line (8) from abrasion with the backrest structure, preventing said joining line (8) from breaking. Furthermore, said joining body (6) can also exercise the function of a hinge, ensuring the rotation of the block (4) with respect to the foam (1), either with respect to the first headrest area (11) or to the second backrest area (12).

Once the foam (1) has been inserted into the structure until the first headrest area (11) is positioned tightly on the headrest structure (21), the block (4) is rotated half a turn around the joining line (8) to be inserted inside the first headrest area (11), filling the cavity (9) that remains on the underside of the headrest structure (21) and avoiding problems related to deformation of the geometry or constitution of the headrest (1).

Figure 4 represents the elements of figure 3 in a position of use of the block (4), in which said block (4) has already been rotated 180 degrees to be inserted into the cavity (9). In this way, the cavity (9) is filled by the block (4), at least in the lowermost area, which is flush with the surface of the first headrest area (11) forming part of the window (13). As can be seen in this figure 4, the block (4) can be designed to have a cross-sectional dimension that is greater than that of the cavity (9). In this way, once the block (4) has been rotated and inserted, there is an additional overpressure in the first head support area (11), which helps to avoid deformations in this area.

As can be seen in Figures 3 and 4, the first headrest area (11) has a bag-shaped geometry, such that it covers and sheathes the headrest structure (21) except for the lower area. Consequently, once the cover is mounted on the foam (1) and the backrest structure, it compresses and presses the foam (1). In those hollow areas, such as for example the cavity (9), a deformation of the first headrest area (11) would be produced by joining both ends of said first headrest area (11). Thanks to the action of the block (4), a resistance to this deformation is created, which maintains an optimal visual appearance of the backrest assembly, without reliefs, sinks or wrinkles.

## Claims

1. A seat backrest foam, wherein
- the foam (1) comprises
a first headrest area (11), configured to cover a headrest structure (21) of the seat, and
a second backrest area (12), configured to cover a backrest structure (22) of the seat,
wherein the first headrest area (11) and the second backrest area (12) form a single foam body (1),
- the foam (1) defines a window (13) arranged between the first headrest area (11) and the second backrest area (12), said window (13) being passable from a first surface of the foam (1), configured to serve as a support for an occupant of the seat, to a second surface of the foam (1) located opposite the first surface,
the foam (1) being **characterized in that** it additionally comprises at least one block (4) arranged adjacent to one of the walls of the foam (1) defining the window (13) and mechanically linked to said wall by means of a joining line (8), said block (4) forming a single body with the foam (1), said block (4) being configured to rotate 180° around the joining line (8).

2. A foam according to claim 1, wherein the rotation of the block (4) is between a manufacturing position, wherein the block (4) is arranged at least partially blocking the window (13), and a position in use, wherein the block (4) is arranged between the first surface and the second surface of the foam (1).

3. A foam according to claim 2, wherein the foam (1) comprises at least one cavity (9) configured to house a respective block (4) in the position of use, said cavity (9) being configured to allow the passage of the headrest structure (21) of the seat or the backrest structure (22) of the seat during the operation of covering the foam (1).

4. A foam according to claim 3, wherein the first headrest area (11) of the foam (1) comprises a pocket-shaped geometry configured to accommodate the headrest structure (21) of the seat, such that the cavity (9) of the foam (1) communicates the window (13) with the interior of said pocket.

5. A foam according to any one of claims 3 or 4, wherein the second backrest area (12) of the foam (1) comprises a pocket-shaped geometry configured to accommodate the backrest structure (21) of the seat, such that the cavity (9) of the foam (1) communicates the window (13) with the interior of said pocket.

6. A foam according to any one of claims 3 to 5, wherein the cross-sectional dimension of the block (4), according to a direction from the first foam surface (1) to the second foam surface (1), is greater than the cross-sectional dimension of the cavity (9), so that the block (4) is compressed in the foam (1) in the position of use.

7. A foam according to any one of the preceding claims, wherein the foam (1) further comprises a joining body (6) arranged adjacent to the joining line (8) and configured to rotate the block (4) with respect to the foam (1), such that the joining body (6) folds back on itself.

8. A foam according to claim 7, wherein the joining body (6) is made of flexible material.

9. A foam according to claim 8, wherein the joining body (6) is made of textile material.

10. A foam according to any one of claims 7 to 9, wherein the joining body (6) is arranged covering the joining line (8) and at least partially the foam (1) and the block (4).

11. A foam according to claim 10, when dependent on claim 2, wherein, the block (4) being arranged in the manufacturing position, the joining body (6) extends in a plane substantially parallel to a surface to be selected between the first foam surface (1) and the second foam surface (1), said joining body (6) being configured to isolate the joining line (8) from both the backrest structure (22) of the seat and the headrest structure (21) during the foam covering operation (1).

12. A seat backrest, comprising a headrest structure (21), a backrest structure (22) and a foam (1) according to any one of the preceding claims.

13. A seat backrest according to claim 12, further comprising a single cover configured to cover the first headrest area (11) and the second backrest area (12) of the foam (1).

14. The backrest assembly method of any one of claims 12 or 13, comprising the steps of:
- obtaining a backrest structure (22) and a headrest structure (21);
- obtaining a foam (1) configured as a single body, comprising at least one block (4) connected to the foam (1) by an area to be selected between the first headrest area (11) and the second backrest area (12) by means of a joining line (8);
- covering the backrest structure (22) and the headrest structure (21) by means of the foam (1),
- rotating the block (4) 180° around the joining line (8); and
- covering the first headrest area (11) and the second backrest area (12) of the foam (1) with a single cover.

15. An assembly method according to claim 15, wherein the step of obtaining a single foam body (1) comprises a previous step of arranging a joining body (6) in the foam forming mold (1), in an area so that the joining body (6) is arranged adjacent to the joining line (8).
